# EUROPEAN PATENT APPLICATION

(11) **EP 3 435 540 A1**
(43) Date of publication of application: **30.01.2019**
(21) Application number: 17382517.5
(22) Date of filing: 28.07.2017
(51) Int. Cl.: H02P 25/18, H02K 5/22, B60L 11/14

(54) **APPARATUS AND METHOD FOR MODIFYING AN ELECTRICAL CONFIGURATION OF AN ELECTRIC DRIVE**

(71) Applicant: Fundación Tecnalia Research & Innovation, 20009 Donostia-San Sebastian, Guipuzcoa (ES)
(72) Inventor: OLAVARRÍA ECHEVARRÍA, IGOR, 20009 Donostia San Sebastián - Guipúzcoa (ES); DÍAZ DE GUERÑU ECHEVARRÍA, Álvaro, 20009 Donostia San Sebastián - Guipúzcoa (ES); ARMENTÍA ORTIZ, Jorge, 20009 Donostia San Sebastián - Guipúzcoa (ES); PEÑA RODRÍGUEZ, Alberto, 20009 Donostia San Sebastián - Guipúzcoa (ES); TRANCHO OLABARRI, Elena, 20009 Donostia San Sebastián - Guipúzcoa (ES); IBARRA BASABE, Edorta, 48940 Leioa-Bizkaia (ES)
(74) Representative: Balder IP Law, S.L.

(57) **Abstract**

An apparatus for modifying an electrical configuration of a stator of an AC motor, the stator comprising at least two phase coils, each of the at least two phase coils comprising at least two windings, the apparatus at least comprising: first and second electrical connectors, each of the first and the second electrical connectors at least comprising a plurality of electrical conductors, each electrical conductor of the plurality of electrical conductors of each of the first and the second electrical connectors being configured to electrically connect to a terminal of each of the at least two windings of an at least first phase coil; a third electrical connector configured to short-circuit the first electrical connector so that the at least two windings of the at least first phase coil become electrically connected in series; a fourth electrical connector configured to short-circuit the second electrical connector so that the at least two windings of the at least first phase coil become electrically connected in parallel; and a mechanical device configured to selectively couple the third electrical connector to the first electrical connector, and the fourth electrical connector to the second electrical connector. Also, an AC motor and a method for modifying an electrical configuration of a stator of an AC motor.

## Description

### TECHNICAL FIELD

The present invention relates to the field of electric drives. More specifically, the invention relates to an apparatus and a method for switching the electrical configuration of a multi-winding electric drive between two or more configurations.

### STATE OF THE ART

As electric powered vehicles and hybrid electric machines improve thanks to the development of new and more efficient technologies, vehicles (the motors thereof) and machines that are powered by fossil fuels are being replaced by these more eco-friendly alternatives.

In any case, electric powered vehicle must be further improved in order to appeal to the customers. In this regard, one of the aspects in which it would be desirable to improve electric motors is the output efficiency of the motors. Adjustable speed motor control inverters are used to power traction motors that are employed in some electric and hybrid electric vehicles. Depending on the speed and torque that is demanded to the vehicle and motor thereof, the control adapts the electric parameters (e.g. current intensity, frequency, voltage) of the electric motor thereby alternating operating points with different efficiency ranges. Operating outside the region of high efficiency is sub-optimal. That is, under various operating conditions, output torque from the electric motor may be outside a desired operating envelope.

An alternative to increase the region of high efficiency of an electric motor is to dynamically change the configuration of the windings of a stator. The use of multiple windings in each phase coil of a stator permits that, by connecting the windings (of each phase coil) with different electrical configurations such as in series or in parallel, the efficiency map of the electric motor is changed.

In this regard, there have been developments in the prior-art to adjust the operating points of an electric motor.

Patent document US-8288979-B2 discloses an apparatus for controlling a wheel motor with a plurality of switches or transistors. A commutator controls the status of the switches so as to connect or disconnect the motor windings.

Patent document US-8415910-B2 discloses an apparatus for controlling a wheel motor by means of a switch module. The switch module has a plurality of switches connected to the stator windings. The switches, however, may not perform correctly due to the heat produced by the windings, therefore the apparatus needs a cooling system for reducing heat.

There is an interest in providing a way in which the stator of an AC motor may be controlled in a reliable and effective way that, furthermore, solves the shortcomings of solutions of the prior-art.

### DESCRIPTION OF THE INVENTION

A first aspect of the invention relates to an apparatus for modifying an electrical configuration of a stator of an AC motor, the stator comprising at least two phase coils, each of the at least two phase coils comprising at least two windings, the apparatus at least comprising: first and second electrical connectors, each of the first and the second electrical connectors at least comprising a plurality of electrical conductors, each electrical conductor of the plurality of electrical conductors of each of the first and the second electrical connectors being configured to electrically connect to a terminal of each of the at least two windings of an at least first phase coil; a third electrical connector configured to short-circuit the first electrical connector so that the at least two windings of the at least first phase coil become electrically connected in series; a fourth electrical connector configured to short-circuit the second electrical connector so that the at least two windings of the at least first phase coil become electrically connected in parallel; and a mechanical device configured to selectively couple the third electrical connector to the first electrical connector, and the fourth electrical connector to the second electrical connector.

The apparatus switches between at least two different electrical configurations of a stator, particularly between at least two different electrical configurations of at least one phase coil thereof. By modifying the electrical configuration of a stator (of a phase coil thereof), the efficiency map of the AC motor may be modified thereby altering the operating envelope of the motor.

The apparatus actuates the mechanical device so as to activate one of the at least two different electrical configurations. When the apparatus actuates the mechanical device, the mechanical device selectively couples one or more electrical connectors (e.g. the third connector, the fourth electrical connector, etc.) to another electrical connector (e.g. the first electrical connector, the second electrical connector, etc.) so that they become electrically connected. At the same time, electrical connectors which were already coupled to each other (and, hence, already electrically connected to each other), are decoupled from each other when the mechanical device is actuated. Therefore, the apparatus only connects one set of electrical connectors to the windings of a phase coil at a time, something which permits selecting an electrical configuration (of the stator) of interest.

Owing to the use of a mechanical device, the apparatus may need smaller and simpler cooling systems since the mechanical device may not be prone to problems due to an excessive heat being built up in the electric drive.

In some embodiments, the plurality of electrical conductors of each of the first and the second electrical connectors comprises: a first electrical conductor configured to electrically connect to a first terminal of an at least first of the at least two windings of the at least first phase coil; a second electrical conductor configured to electrically connect to a second terminal of the at least first of the at least two windings of the at least first phase coil; a third electrical conductor configured to electrically connect to a first terminal of an at least second of the at least two windings of the at least first phase coil; and a fourth electrical conductor configured to electrically connect to a second terminal of the at least second of the at least two windings of the at least first phase coil.

In some embodiments, the third electrical connector is configured to short-circuit the first electrical connector such that the second electrical conductor of the first electrical connector is short-circuited with the third electrical conductor of the first electrical connector; and the fourth electrical connector is configured to short-circuit the second electrical connector such that: the first electrical conductor of the second electrical connector is short-circuited with the third electrical conductor of the second electrical connector; and the second electrical conductor of the second electrical connector is short-circuited with the fourth electrical conductor of the second electrical connector.

The third electrical connector configures the first electrical connector such that the at least two windings have one terminal electrically connected thereby sharing a same potential, whereas the remaining terminal of each of the at least two windings do not share a same potential, that is, they are electrically connected because they are within a same electrical circuit but the terminals are not directly connected.

The fourth electrical connector configures the second electrical connector such that the at least two windings have one terminal electrically connected thereby sharing a same potential, and the remaining terminal of each of the at least two windings are also electrically connected thereby sharing a same potential but which is different from the potential of the other terminal.

In some embodiments, the mechanical device comprises an actuator configured to move linearly.

The mechanical device of the apparatus may move between at least two positions at which one or another set of electrical connectors become coupled so as to establish an electrical connection with the stator.

For example, the first electrical connector may be provided at a first position of the apparatus, whereas the second electrical connector may be provided at a second position. The actuator may move and press the third electrical connector towards the first position (against the first electrical connector), or it may move and press the fourth electrical connector towards the second position (against the second electrical connector), thereby selectively coupling respective electrical connectors.

In some of these embodiments, the actuator comprises a piston; and each of the third and the fourth electrical connectors is mechanically coupled with the piston

The piston may permit the selective coupling of the first set of electrical connectors (i.e. coupling the third electrical connector to the first electrical connector) and the second set of electrical connectors (i.e. coupling the fourth electrical connector to the second electrical connector) in a reliable manner. Pistons are mechanically simple devices and generally have a long operating life.

The mechanical device may further comprise a retention device or a pressing device, for example at least one magnet or at least one spring, that improves the coupling between the electrical connectors so that a more reliable electrical connection may be provided.

In some embodiments, the mechanical device comprises a spindle actuator. In these embodiments, each of the third and the fourth electrical connectors is mechanically coupled with a mechanical element of the spindle actuator.

The spindle actuator may move the mechanical element in a direction perpendicular to a lengthwise direction of the AC motor, something which may be advantageous for reducing the size of the apparatus. The spindle actuator may permit the selective coupling of the first set of electrical connectors (i.e. coupling the third electrical connector to the first electrical connector) and the second set of electrical connectors (i.e. coupling the fourth electrical connector to the second electrical connector) in a reliable manner.

In some embodiments, the mechanical device comprises an actuator configured to move rotationally.

The actuator of the apparatus may move between at least two positions at which one or another set of electrical connectors become coupled so as to establish an electrical connection with the stator.

For example, the first electrical connector may be provided at a first position of the apparatus, whereas the second electrical connector may be provided at a second position. The actuator may rotate and press the third electrical connector towards the first position (against the first electrical connector), or it may rotate and press the fourth electrical connector towards the second position (against the second electrical connector), thereby selectively coupling respective electrical connectors. Accordingly, the at least two positions at which the first and the second electrical connectors are provided are generally at a same distance from the rotary actuator but angularly spaced relative to the rotary actuator.

In some of these embodiments, the actuator comprises a rotary solenoid.

The rotary solenoid may be provided with one or more protruding elements that press one or more electrical connectors against another electrical connector (e.g. the first electrical connector, the second electrical connector, etc.) thereby mechanically coupling them. As the rotary solenoid is actuated, its body rotates and the one or more protruding elements stop pressing one or more electrical connectors (and, thus, decouples them from an electrical connector, e.g. the first electrical connector) and start pressing other one or more electrical connectors against another electrical connector (e.g. the second electrical connector) thereby mechanically coupling them.

In some embodiments, the apparatus further comprises: fifth and sixth electrical connectors, each of the fifth and the sixth electrical connectors at least comprising a plurality of electrical conductors, each electrical conductor of the plurality of electrical conductors being configured to electrically connect to a terminal of each of the at least two of an at least second phase coil; a seventh electrical connector configured to short-circuit the fifth electrical connector so that the at least two windings of the at least second phase coil become electrically connected in series; and an eighth electrical connector configured to short-circuit the sixth electrical connector so that the at least two windings of the at least second phase coil become electrically connected in parallel. In some of these embodiments, the mechanical device is further configured to selectively couple the seventh electrical connector to the fifth electrical connector, and to couple the eight electrical connector to the sixth electrical connector.

In some of these embodiments, the plurality of electrical conductors of each of the fifth and the sixth electrical connectors comprises: a first electrical conductor configured to electrically connect to a first terminal of an at least first of the at least two windings of the at least second phase coil; a second electrical conductor configured to electrically connect to a second terminal of the at least first of the at least two windings of the at least second phase coil; a third electrical conductor configured to electrically connect to a first terminal of an at least second of the at least two windings of the at least second phase coil; and a fourth electrical conductor configured to electrically connect to a second terminal of the at least second of the at least two windings of the at least second phase coil.

The apparatus may modify the electrical configuration of two or more phase coils of a stator in an AC motor. AC motors often have a stator with three phase coils, and it may be desirable to adjust the electrical configuration of the three of them with a single apparatus. This may be achieved by adding, to the apparatus, additional electrical connectors configured to electrically connect to the windings of each phase coil, and additional electrical connectors configured to vary the electrical connections between the several windings of each phase coil (by means of the same mechanical device or different mechanical devices).

Further, in some embodiments, one or more phase coils of the stator includes three or more windings. In this case, the phase coil may support additional electrical configurations that the apparatus may select. For example, the windings may be connected in series, in parallel, or a combination thereof (that is, one or more windings may be connected in series, and one or more windings may be connected in parallel with respect to other windings). In such embodiments, the apparatus may comprise further electrical connectors (in addition to the first and the second electrical connectors) with electrical conductors configured to be electrically connected to the terminals of some or all additional windings; or, alternatively, the plurality of electrical conductors of each of the first and the second electrical connectors may comprise electrical conductors configured to be electrically connected to the terminals of some or all additional windings. The apparatus further comprises additional electrical connectors for short-circuiting the windings in different ways so as to provide the different electrical configurations. Additionally, the mechanical device may be configured so as to selectively couple the electrical connectors so that the different available electrical configurations may be provided during the operation of the AC motor, or a different mechanical device may be provided so as to carry out such operation. It is readily apparent to the reader of the present disclosure that different combinations are possible without departing from the scope of the present invention.

In some embodiments, the fourth electrical connector comprises two electrical connectors.

The fourth electrical connector may be provided in the form of two electrical connectors that are configured to short-circuit the second electrical connector such that the at least two windings of the at least first phase coil become electrically connected in parallel.

A second aspect of the invention relates to an AC motor comprising: a stator comprising at least two phase coils, each of the at least two phase coils comprising at least two windings; and at least one apparatus according to the first aspect of the invention configured to modify an electrical configuration of one or more phase coils of the at least two phase coils of the stator.

In some embodiments, the fourth electrical connector comprises two electrical connectors.

Similar advantages as those described for the first aspect of the invention may also be applicable to the second aspect of the invention.

A third aspect of the invention relates to a method for modifying an electrical configuration of a stator of an AC motor, the stator comprising at least two phase coils, each of the at least two phase coils comprising at least two windings, the method comprising: providing first and the second electrical connectors, each of the first and the second electrical connectors comprising a plurality of electrical conductors; for each of the first and the second electrical connectors, electrically connecting each electrical conductor of the plurality of electrical conductors to a terminal of each of the at least two windings of an at least first phase coil; providing a third electrical connector configured to short-circuit the first electrical connector so that the at least two windings of the at least first phase coil become electrically connected in series; providing a fourth electrical connector configured to short-circuit the second electrical connector so that the at least two windings of the at least first phase coil become electrically connected in parallel; and selectively coupling, with a mechanical device, the third electrical connector to the first electrical connector, and the fourth electrical connector to the second electrical connector.

By providing the several electrical connectors and selectively coupling subsets of them, the electrical configuration of at least one phase coil of the stator may be selectively switched between at least two different electrical configurations.

In some embodiments, the plurality of electrical conductors of each of the first and the second electrical connectors comprises first, second, third and fourth electrical conductors. Further, electrically connecting each electrical conductor of the plurality of electrical conductors comprises, for each of the first and the second electrical connectors, electrically connecting: the first electrical conductor to a first terminal of an at least first of the at least two windings of the at least first phase coil; the second electrical conductor to a second terminal of the at least first of the at least two windings of the at least first phase coil; the third electrical conductor to a first terminal of an at least second of the at least two windings of the at least first phase coil; and the fourth electrical conductor to a second terminal of the at least second of the at least two windings of the at least first phase coil.

In some embodiments, upon coupling the third electrical connector to the first electrical connector, the third electrical connector short-circuits the second electrical conductor of the first electrical connector and the third electrical conductor of the first electrical connector; and upon coupling the fourth electrical connector to the second electrical connector, the fourth electrical connector short-circuits: the first electrical conductor of the second electrical connector and the third electrical conductor of the second electrical connector; and the second electrical conductor of the second electrical connector and the fourth electrical conductor of the second electrical connector.

In some embodiments, selectively coupling with the mechanical device comprises: operating an actuator configured to move between at least a first position that couples the third electrical connector to the first electrical connector, and at least a second position that couples the fourth electrical connector to the second electrical connector. In some of these embodiments, the actuator comprises a piston. In some other of these embodiments, the actuator comprises a spindle.

In some embodiments, selectively coupling with the mechanical device comprises: operating an actuator configured to move rotationally between at least a first position that couples the third electrical connector to the first electrical connector, and at least a second position that couples the fourth electrical connector to the second electrical connector. In some of these embodiments, the actuator comprises a rotary solenoid.

In some embodiments, the method further comprises: providing fifth and sixth electrical connectors, each of the fifth and the sixth electrical connectors comprising a plurality of electrical conductors; for each of the fifth and the sixth electrical connectors, electrically connecting each electrical conductor of the plurality of electrical conductors to a terminal of each of the at least two windings of an at least second phase coil; providing a seventh electrical connector configured to short-circuit the fifth electrical connector so that the at least two windings of the at least second phase coil become electrically connected in series; providing an eighth electrical connector configured to short-circuit the sixth electrical connector so that the at least two windings of the at least second phase coil become electrically connected in parallel; and selectively coupling, with the mechanical device, the seventh electrical connector to the fifth electrical connector, and the eighth electrical connector to the sixth electrical connector.

In some of these embodiments, features previously described with respect to the first, second, third and fourth electrical connectors are also applicable to the fifth, sixth, seventh and eighth electrical connectors, respectively, but in connection with the at least second phase coil. For example, but without limitation, the plurality of electrical conductors of each of the fifth and the sixth electrical connectors comprises first, second, third and fourth electrical conductors; and electrically connecting each electrical conductor of the plurality of electrical conductors of the fifth and the sixth electrical connectors comprises, for each of the fifth and the sixth electrical connectors, electrically connecting: the first electrical conductor to a first terminal of an at least first of the at least two windings of the at least second phase coil; the second electrical conductor to a second terminal of the at least first of the at least two windings of the at least second phase coil; the third electrical conductor to a first terminal of an at least second of the at least two windings of the at least second phase coil; and the fourth electrical conductor to a second terminal of the at least second of the at least two windings of the at least second phase coil.

In some cases, an AC motor comprises a stator with, for example, three phase coils. In some embodiments, the method further comprises providing additional electrical connectors and electrically connecting them to some or all windings of each of the three phase coils; and providing further electrical connectors configured to short-circuit some electrical conductors of these additional electrical connectors thereby allowing, for each phase coil, to change from one electrical configuration to another. In this sense, the same mechanical device or other mechanical device/s may carry out the selective coupling of the electrical conductors.

In some embodiments, one or more phase coils of the stator includes three or more windings. In these cases, the phase coil may support additional electrical configurations. For example, the windings may be connected in series, in parallel, or a combination thereof (that is, one or more windings may be connected in series with respect to other windings, and one or more windings may be connected in parallel with respect to other windings). In such embodiments, the method may further comprise providing further electrical connectors (in addition to the first and the second electrical connectors) with electrical conductors configured to be electrically connected to the terminals of some or all additional windings; or, alternatively, the plurality of electrical conductors of each of the first and the second electrical connectors may comprise electrical conductors that may be electrically connected to the terminals of some or all additional windings. The method further comprises providing additional electrical connectors for short-circuiting the windings in different ways so as to provide the different electrical configurations. Additionally, the method further comprises selectively coupling, with the same mechanical device or a different one (or different ones), the electrical connectors so that the different available electrical configurations may be provided during the operation of the AC motor. It is readily apparent to the reader of the present disclosure that different combinations are possible without departing from the scope of the present invention.

In some embodiments, the fourth electrical connector comprises two electrical connectors.

Further, similar advantages as those described for the first aspect of the invention may also be applicable to the third aspect of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows an exemplary electric drive.
Figures 2A-2B show different electrical configurations of a stator in the electric drive of Figure 1.
Figure 3 shows an exemplary phase coil of a stator.
Figures 4A-4B show different electrical configurations of a phase coil such as the one of Figure 3.
Figure 5 shows the phase coil of Figure 3 connected to an electrical connector suitable for apparatuses and methods according to embodiments of the invention.
Figure 6 shows an exemplary electric drive with a partial representation of an apparatus in accordance with an embodiment of the invention.
Figures 7A-7B show electrical connectors suitable for apparatuses and methods in accordance with embodiments of the invention.
Figure 8 partially shows an apparatus in accordance with an embodiment of the invention.
Figures 9A-9B show an apparatus in accordance with an embodiment of the invention.
Figures 10A-10B show an apparatus in accordance with an embodiment of the invention.
Figure 11 shows an apparatus similar to that of Figures 10A-10B.
Figure 12 shows a grouping of electrical connectors suitable for apparatuses such as the ones of Figures 10A-10B and 11.
Figure 13 shows an apparatus in accordance with an embodiment of the invention.
Figures 14A-14B show the apparatus of Figure 13 without its cover.
Figure 15 shows the mechanical device of the apparatus of Figures 13, 14A-14B.
Figures 16A-16B show two electrical connectors for the apparatus of Figures 13, 14A-14B in connected and not connected configurations.

### DESCRIPTION OF WAYS OF CARRYING OUT THE INVENTION

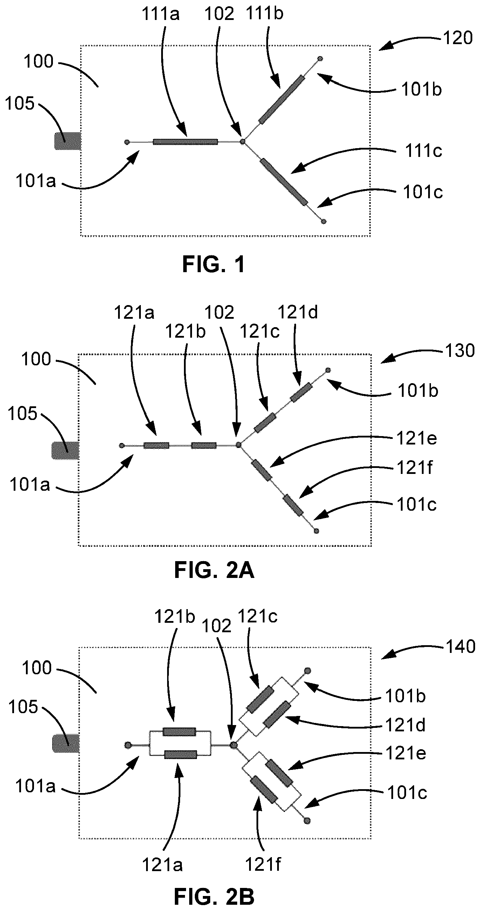

Figure 1 shows an electric drive comprising an AC motor 100, an output shaft 105 and a housing 120. The AC motor 100 comprises a stator with a plurality of phase coils. In the example of Figure 1, the stator comprises three phase coils 101a-101c (that is, it features three phases). The first phase coil 101a comprises a first set of windings 111a with one or more windings, the second phase coil 101b comprises a second set of windings 111b with one or more windings, and the third phase coil 101c comprises a third set of windings 111c with one or more windings. The stator further includes a neutral line 102.

Figures 2A-2B show two different electrical configurations 130, 140 of the stator of the AC motor 100.

The first electrical configuration 130 is defined by the connection in series of the windings of the set of windings of each phase coil 101a-101c: the first phase coil 101a comprises a first winding 121a in series with a second winding 121b; the second phase coil 101b comprises a third winding 121c in series with a fourth winding 121d; and the third phase coil 101c comprises a fifth winding 121e in series with a sixth winding 121f.

The second electrical configuration 140 is defined by the same windings 121a-121f of the three phase coils 101a-101c, but with the connection in parallel of each pair of windings. That is, the first, the third and the fifth windings 121a, 121c, 121e are in parallel with the second, the fourth and the sixth windings 121b, 121d, 121f, respectively.

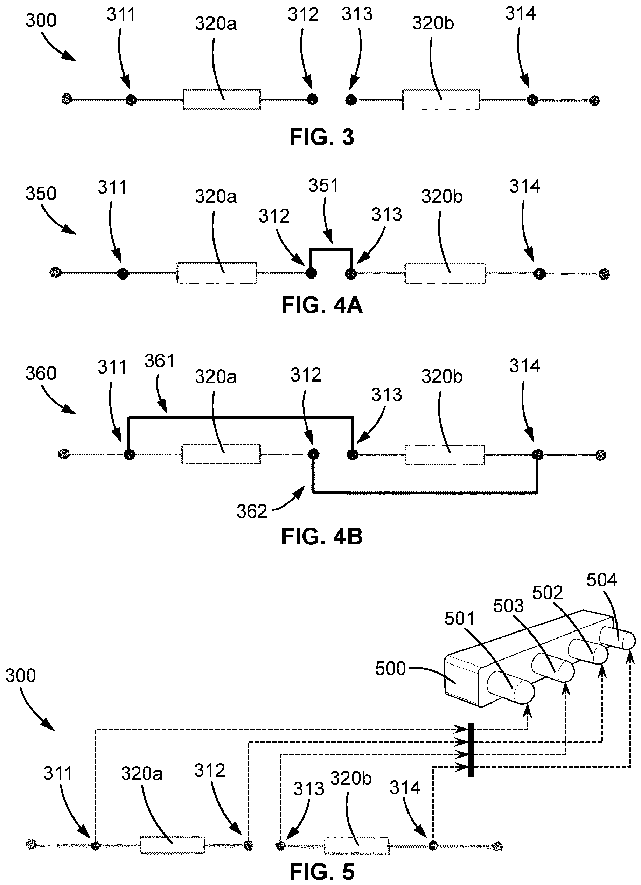

Figure 3 shows an exemplary phase coil 300 of a stator such as the stator of the AC motor 100 of Figure 1. The phase coil 300 comprises a first winding 320a and a second winding 320b. The first and the second windings 320a-320b are shown electrically disconnected for illustrating that the first winding 320a includes first and second terminals 311-312, and that the second winding 320b includes first and second terminals 313-314 as well.

Figures 4A-4B show two different electrical configurations 350, 360 of a phase coil such as the phase coil 300 of Figure 3.

The first electrical configuration 350 is a configuration in series defined by a phase coil in which the second terminal 312 of the first winding 320a is electrically connected to the first terminal 313 of the second winding 320b.

The second electrical configuration 360 is a configuration in parallel defined by a phase coil in which the first terminal 311 of the first winding 320a is electrically connected to the first terminal 313 of the second winding 320b, and the second terminal 312 of the first winding 320a is electrically connected to the second terminal 314 of the second winding 320b.

Figure 5 shows the phase coil 300 connected to a male electrical connector 500 suitable for apparatuses and methods in accordance with embodiments of the invention. The male electrical connector 500 comprises a plurality of electrical conductors at least including first, second, third and fourth electrical conductors 501-504. The first electrical conductor 501 is configured to electrically connect to the first terminal 311 of the first winding 320a, the second electrical conductor 502 is configured to electrically connect to the second terminal 312 of the first winding 320a, the third electrical conductor 503 is configured to electrically connect to the first terminal 313 of the second winding 320a, and the fourth electrical conductor 504 is configured to electrically connect to the second terminal 314 of the second winding 320b.

The male electrical connector 500 is provided with plugs (i.e. male connector) for its connection to other electrical connectors (not illustrated), but in other embodiments the male electrical connector 500 may be provided as a female connector with jacks without departing from the scope of the present disclosure.

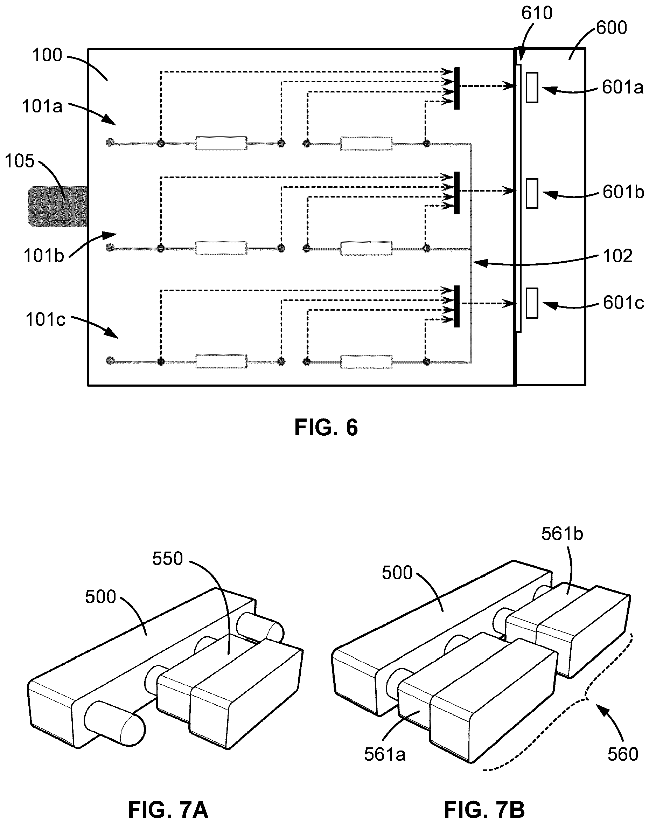

Figure 6 shows an exemplary electric drive with a partial representation of an apparatus 600 in accordance with an embodiment of the invention. The electric drive comprises the AC motor 100 that includes the stator with three phases (phase coils 101a-101c and the neutral line 102). The apparatus 600 may modify an electrical configuration of the stator of the AC motor 100, particularly, the electrical configuration of each of the phase coils 101a-101c. The apparatus 600 comprises a supporting element such as a plate 610 where electrical connectors 601a-601c are attached to. In other embodiments (not illustrated), the electrical connectors 601a-601c are directly attached to a housing of the electric drive, for example the housing 120 of Figure 1. The electrical connectors 601a-601c may be, for example, like the male electrical connector 500 of Figure 5.

Figures 7A-7B show electrical connectors suitable for apparatuses and methods in accordance with embodiments of the invention.

In Figure 7A there is shown the male electrical connector 500 plugged to a female electrical connector 550 configured to short-circuit the male electrical connector 500 so that two windings (such as the windings 320a, 320b of Figure 5) of a phase coil become electrically connected in series. With reference to the electrical conductors 501-504 of Figure 5, the female electrical connector 550 short-circuits the second and the third electrical conductors 502, 503.

In Figure 7B there is shown the male electrical connector 500 plugged to a female electrical connector 560 comprising two female electrical connectors 561a, 561b that are configured to short-circuit the male electrical connector 500 so that two windings (such as the windings 320a, 320b of Figure 5) of a phase coil become electrically connected in parallel. With reference to the electrical conductors 501-504 of Figure 5, the female electrical connector 560 short-circuits the first and the third electrical conductors 501, 503, and also short-circuits the second and the fourth electrical conductors 502, 504.

In other embodiments (not illustrated), the male electrical connector 500 is provided as a female electrical connector whereas the female electrical connectors 550, 560-561 are provided as male electrical connectors.

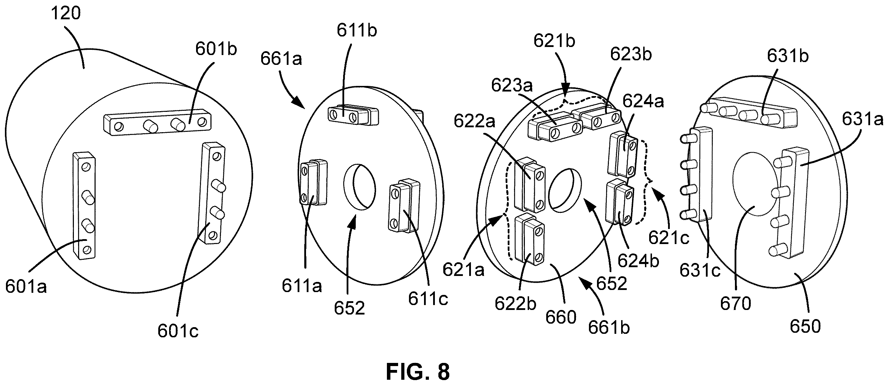

Figure 8 partially shows an apparatus in accordance with an embodiment of the invention. The apparatus comprises a first plate 650, a second plate 660, a mechanical device 670, a first set of electrical connectors with three male electrical connectors 601a-601c (similar to connector 500 of Figure 7A) attached to a supporting element (not illustrated) in turn attached to the housing 120 of an electric drive, a second set of electrical connectors with three male electrical connectors 631a-631c attached to the first plate 650, a third set of electrical connectors with three female electrical connectors 611a-613a attached to a first side 661a of the second plate 650, and a fourth set of electrical connectors with three female electrical connectors 621a-623a attached to a second side 661b of the second plate 660.

Each of the three male electrical connectors 601a-601c comprises a plurality of electrical conductors, each of which is electrically connected to a terminal of a winding of one of the phase coils of an AC motor within the electric drive. Similarly, each of the three male electrical connectors 631a-631c comprises a plurality of electrical conductors, each of which is electrically connected to a terminal of a winding of a same stator in the AC motor. That is, both the first male electrical connector 601a of the first set of electrical connectors and the first male electrical connector 631a of the second set of electrical connectors are electrically connected to the windings of a first phase coil, both the second male electrical connector 601b of the first set of electrical connectors and the second male electrical connector 631b of the second set of electrical connectors are electrically connected to the windings of a second phase coil, and both the third male electrical connector 601c of the first set of electrical connectors and the third male electrical connector 631c of the second set of electrical connectors are electrically connected to the windings of a third phase coil. Each pair of electrical connectors is connected in parallel to the corresponding phase coil.

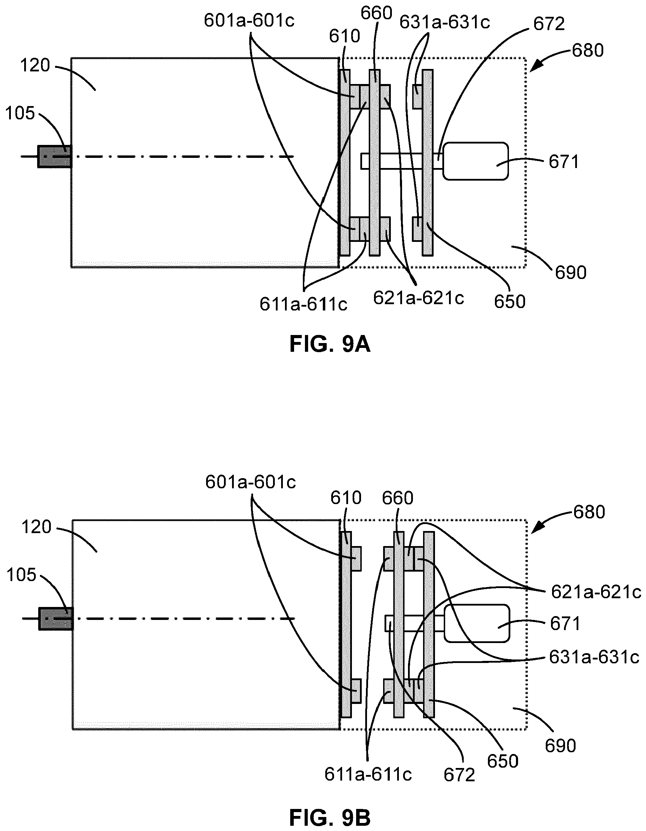

When the mechanical device 670 is actuated, the mechanical device 670 moves the second plate 660 towards the first set of electrical connectors or the second set of electrical connectors thereby selectively coupling either the third set of electrical connectors (provided on the first side 661a) to the first set of electrical connectors, or the fourth set of electrical connectors (provided on the second side 661b) to the second set of electrical connectors. In this regard, the second plate 660 comprises a through hole that permits the movement of the second plate 660 by the mechanical device 670 as it is shown in Figures 9A-9B.

The three female electrical connectors 611a-611c of the third set of electrical connectors comprise the connector 550 of Figure 7A which is configured to short-circuit electrical conductors of one male electrical connector 601a-601c of the first set of electrical connectors so that at least two windings of one phase coil become electrically connected in series. The three female electrical connectors 621a-621c of the fourth set of electrical connectors comprise the connector 560 (that comprises the two connectors 561a, 561b) of Figure 7B which is configured to short-circuit electrical conductors of one male electrical connector 631a-631c of the second set of electrical connectors so that at least two windings of one phase coil become electrically connected in parallel.

In this configuration, since only two electrical conductors of the male electrical connectors 601a-601c of the first set of electrical connectors need to be short-circuited, only these two electrical conductors need to be provided as plugs; this is why only the two plugs in the middle of the male electrical connectors 601a-601c are provided.

Figures 9A-9B show an apparatus 690 in accordance with an embodiment of the invention. The apparatus 690 features all the components described above with respect to the apparatus of Figure 8.

In Figures 9A-9B there is shown a supporting element 610 (such as a plate) to which the first set of electrical connectors 601a-601c is attached. Further, the apparatus 690 comprises a mechanical device that includes an actuator 671 configured to move linearly. The actuator 671 includes a piston 672 that, in Figure 9A, is shown at a first position (due to the actuator 671) whereby it couples the third set of electrical connectors 611a-611c to the first set of electrical connectors; whereas in Figure 9B, the piston 672 is shown at a second position (due to the actuator 671) whereby it couples the fourth set of electrical connectors 621a-621c to the second set of electrical connectors 631a-631c. Since the second plate 660 (and thus each of the third and the fourth electrical connectors as well) is mechanically coupled with the piston 672, the second plate 660 follows the motion of the piston 672 for selectively coupling the different sets of electrical connectors.

The apparatus 690 further comprises a cover 680 for protecting the components of the apparatus 690.

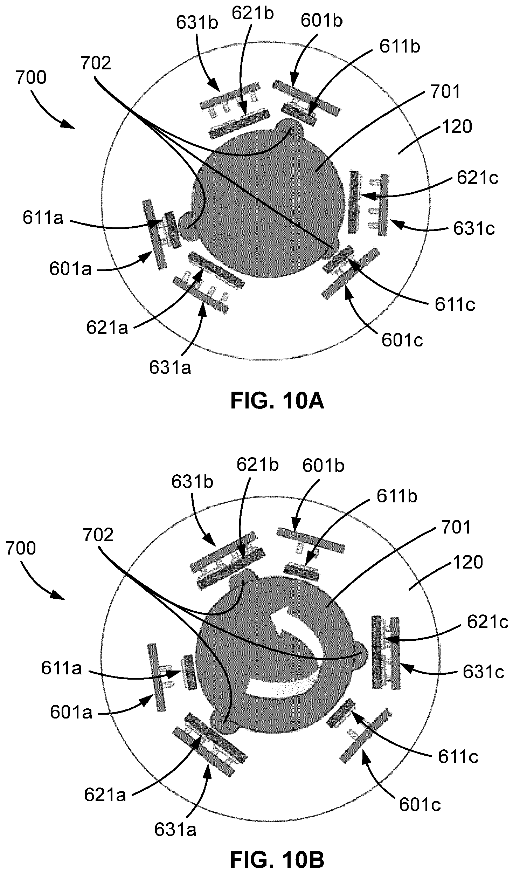

Figures 10A-10B show an apparatus 700 in accordance with an embodiment of the invention. The apparatus 700 comprises a mechanical device in turn comprising an actuator 701 to move rotationally with a set of protruding elements 702. The actuator 701 may be, for example, a rotary solenoid.

As the actuator 701 rotates, the actuator 701 selectively couples either the third set of electrical connectors 611a-611c to the first set of electrical connectors 601a-601c, or the fourth set of electrical connectors 621a-621c to the second set of electrical connectors 631a-631c owing to the radial pressing exerted by the protruding elements 702. Therefore, and as shown in Figures 10A and 10B (that show the mechanical device selectively coupling different sets of electrical connectors) when the protruding elements 702 are rotated (in this example, the rotation of the apparatus 700 from the first position of Figure 10A to the second position of Figure 10B is counterclockwise as shown with an arrow for illustrative purposes only) to radially press a different set of electrical connectors against the first or the second set of electrical connectors 601a-601c, 631a-631c, they first stop radially pressing the set of electrical connectors that was being pressed at that time thereby decoupling it from either the first or the second set of electrical connectors 601a-601c, 631a-631c. It is readily apparent that by providing multiple sets of electrical connectors angularly spaced around the actuator 701, more than two electrical configurations may be selected with the same apparatus, in which case the actuator 701 shall be rotatable between more than two positions.

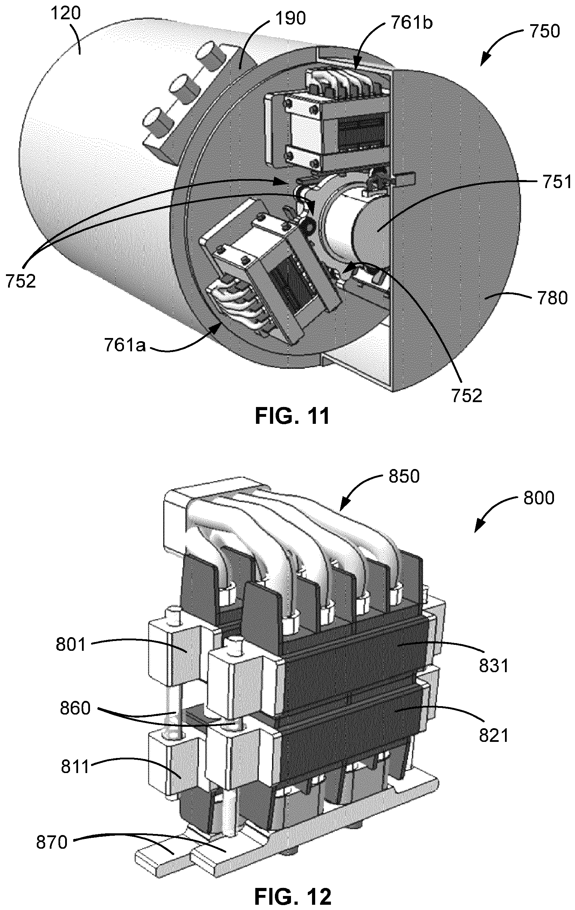

Figure 11 shows an apparatus 750 similar to that of Figures 10A-10B. The apparatus 750 comprises a cover 780, a rotary actuator 751 with a plurality of protruding elements 752, and at least two electrical connectors assemblies 761a, 761b that permit modifying an electrical configuration of phase coils of a stator. The assemblies 761a, 761b are described below with respect to Figure 12, which shows one such assembly without its cover. In Figure 11 there is also depicted a power bus 190 of the electric drive.

Figure 12 shows an electrical connectors assembly 800 suitable for apparatuses such as the ones of Figures 10A-10B and 11. In contrast to assemblies 761a, 761b of Figure 11, the assembly 800 is shown without an outer cover or housing that fits all the components.

The assembly 800 comprises a first electrical connector 801, a second electrical connector 831, a third electrical connector 811 and a fourth electrical connector 821. Both the first and the second electrical connectors 801, 831 include a plurality of electrical conductors 850 for electrically connecting to terminals of windings of at least one phase coil of a stator. By means of the electrical conductors 850, the first and the second electrical connectors 801, 831 are connected in parallel to the at least one phase coil, therefore when the fourth electrical connector 821 is coupled to the second electrical connector 831, the first electrical connector 801 provides an open circuit (as it can be appreciated from the phase coil 300 of Figure 3), and vice versa.

The assembly 800 further comprises cams 870 against which an actuator presses in order to selectively couple the third electrical connector 811 to the first electrical connector 801 or the fourth electrical connector 821 to the second electrical connector 831, and sliding guides 860 with compression springs that improve the reliability of the coupling between two electrical connectors.

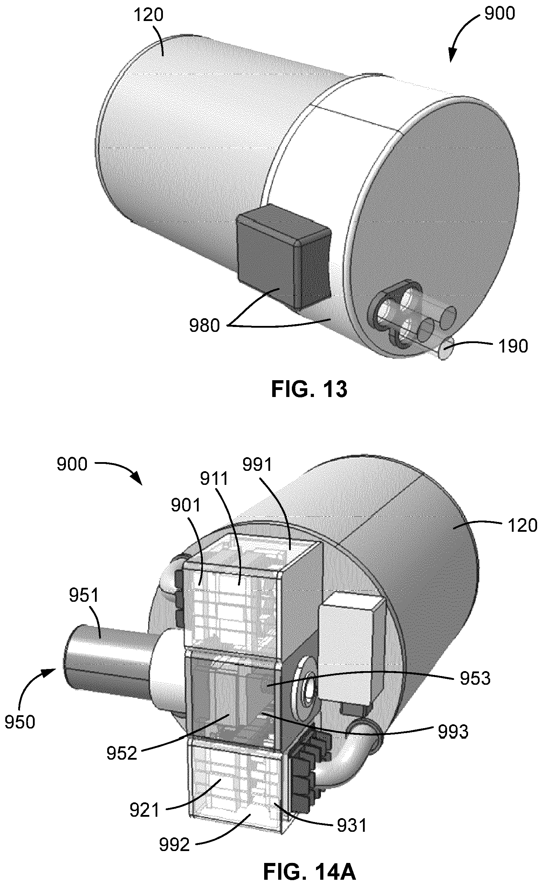

Figure 13 shows an apparatus 900 in accordance with an embodiment of the invention. The apparatus 900 comprises a cover 980 for protecting its components, which are described next with reference to Figures 14A-14B. The apparatus 900 is attached to the housing 120 of an electric drive, and the cover 980 is slotted so as to let the power bus 190 of the electric drive pass through.

Figures 14A-14B show, from two different points of view, the apparatus 900 of Figure 13 without its cover 980. The apparatus 900 comprises a first electrical connector 901, a second electrical connector 911, a third electrical connector 921, a fourth electrical connector 931, a second connector box 992, and a mechanical device 950. The first and the fourth electrical connectors 901, 931 are preferably fixed and do not move with respect to the electric drive, whereas the second and the third electrical connectors 911, 921 are movable.

The apparatus 900 further comprises a first connector box 991 that in addition to protecting the first and the second electrical connectors 901, 911 assists in the positioning of the second electrical connector 911; to this end, the first connector box 991 is provided with guides through where a flange of the second electrical connector 911 fits so as to enhance the sliding motion of the connector. The apparatus 900 also comprises a second connector box 992 with guides, and the third electrical connector 921 has a flange inserted therein in order to slide.

The electrical conductors of the first electrical connector 901 are electrically connected to terminals of at least two windings of one of the phase coils of an AC motor within the electric drive, and the electrical conductors of the fourth electrical connector 931 are electrically connected to terminals of a winding of one of the phase coils of the AC motor. Owing to the function of the mechanical device 950, the second electrical connector 911 may become electrically connected to the first electrical connector 901 thereby short-circuiting several electrical conductors thereof such that the at least two windings of one phase coil are in series. Further, the mechanical device 950 may also be actuated in such a way so as to electrically connect the third electrical connector 921 to the fourth electrical connector 931 thereby short-circuiting several electrical conductors thereof such that the at least two windings of one phase coil are in parallel.

The mechanical device 950 comprises a spindle actuator in turn comprising an actuator 951, a mechanical element 952 and a spindle 953. The second and the third electrical connectors are attached to the mechanical element 952. The spindle actuator moves the mechanical element 952 in a direction perpendicular to an axial direction of the electric drive so as to selectively couple one of the second and the third electrical connectors 911, 921 to the first or the fourth electrical connector 901, 931, respectively. The mechanical device 950 further comprises a box 993 with guides for directing the motion of the mechanical element 952.

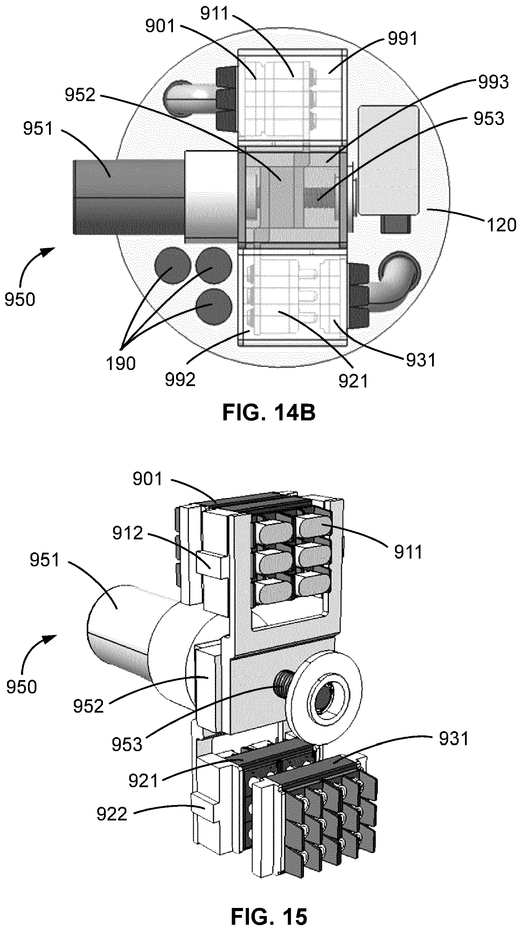

Figure 15 shows the mechanical device 950 of the apparatus 900 of Figures 13, 14A-14B. In Figure 15 it can be observed that the second electrical connector 911 is provided with a first flange 912 on a first side, and a second flange on a second side opposite to the first side. Similarly, the third electrical connector 921 includes a first flange 922 on a first side, and a second flange on a second side opposite to the first side. The flanges 912, 922 of the electrical connectors enhance the sliding motion of the electrical connectors owing to the guides provided in the connector boxes (for example, the first and second connector boxes 991, 992 of Figures 14A, 14B).

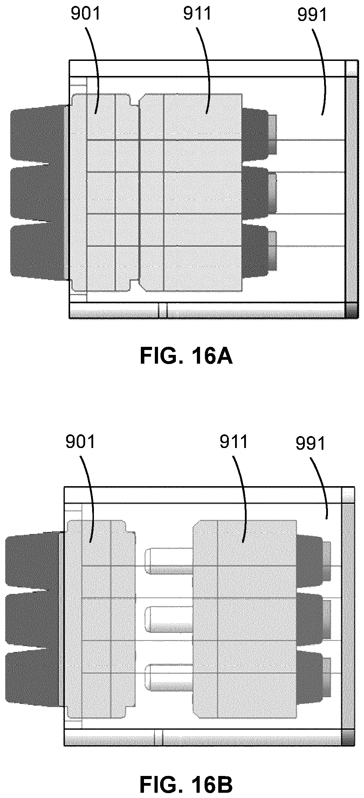

Figures 16A shows the first and the second electrical connectors 901, 911 of Figures 14A-14B, 15 in a connected configuration.

When the second electrical connector 911 is moved due to the action of a mechanical device (such as the mechanical device 950 of Figures 14A-14B, 15), it may get disconnected from the first electrical connector 901 thereby not short-circuiting electrical conductors thereof. This not connected configuration is illustrated in Figure 16B.

Even though the terms first, second, third, etc. have been used herein to describe several components, it will be understood that the components should not be limited by these terms since the terms are only used to distinguish one component from another. For example, the first electrical connector could as well be named second electrical connector and the second electrical connector could be named first electrical connector or third electrical connector without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An apparatus (600, 700, 750, 900) for modifying an electrical configuration of a stator of an AC motor (100), the stator comprising at least two phase coils (101a-101c, 300), each of the at least two phase coils (101a-101c, 300) comprising at least two windings (121a-121f, 320a, 320b), the apparatus (600, 700, 750, 900) at least comprising:
first and second electrical connectors (500, 601a, 631a, 901, 931), each of the first and the second electrical connectors (500, 601a, 631a, 901, 931) at least comprising a plurality of electrical conductors (501-504, 850), each electrical conductor of the plurality of electrical conductors (501-504, 850) of each of the first and the second electrical connectors (500, 601 a, 631a, 901, 931) being configured to electrically connect to a terminal (311-314) of each of the at least two windings (121a-121f, 320a, 320b) of an at least first phase coil (101a, 300);
a third electrical connector (550, 611a, 921) configured to short-circuit the first electrical connector (500, 601a, 901) so that the at least two windings (121a-121f, 320a, 320b) of the at least first phase coil (101a, 300) become electrically connected in series;
a fourth electrical connector (560, 621a, 921) configured to short-circuit the second electrical connector (500, 631 a, 931) so that the at least two windings (121a-121f, 320a, 320b) of the at least first phase coil (101a, 300) become electrically connected in parallel; and
a mechanical device (670, 950) configured to selectively couple the third electrical connector (550, 611a, 911) to the first electrical connector (500, 601a, 901), and the fourth electrical connector (560, 621a, 921) to the second electrical connector (500, 631a, 931).

2. The apparatus (600, 700, 750, 900) of claim 1, wherein the plurality of electrical conductors (501-504, 850) of each of the first and the second electrical connectors (500, 601 a, 631 a, 901, 931) comprises:
a first electrical conductor (501, 850) configured to electrically connect to a first terminal (311) of an at least first of the at least two windings (121a-121f, 320a, 320b) of the at least first phase coil (101a, 300);
a second electrical conductor (502, 850) configured to electrically connect to a second terminal (312) of the at least first of the at least two windings (121a-121f, 320a, 320b) of the at least first phase coil (101a, 300);
a third electrical conductor (503, 850) configured to electrically connect to a first terminal (313) of an at least second of the at least two windings (121a-121f, 320a, 320b) of the at least first phase coil (101a, 300); and
a fourth electrical conductor (504, 850) configured to electrically connect to a second terminal (314) of the at least second of the at least two windings (121a-121f, 320a, 320b) of the at least first phase coil (101a, 300).

3. The apparatus (600, 700, 750, 900) of claim 2, wherein:
the third electrical connector (550, 611a, 911) is configured to short-circuit the first electrical connector (500, 601a, 901) such that the second electrical conductor (502, 850) of the first electrical connector (500, 601a, 901) is short-circuited with the third electrical conductor (503, 850) of the first electrical connector (500, 601a, 901); and
the fourth electrical connector (560, 621a, 921) is configured to short-circuit the second electrical connector (500, 631a, 931) such that:
the first electrical conductor (501, 850) of the second electrical connector (500, 631a, 931) is short-circuited with the third electrical conductor (503, 850) of the second electrical connector (500, 631a, 931); and
the second electrical conductor (502, 850) of the second electrical connector (500, 631a, 931) is short-circuited with the fourth electrical conductor (504, 850) of the second electrical connector (500, 631a, 931).

4. The apparatus (600) of any of the preceding claims, wherein the mechanical device (670) comprises an actuator (671), the actuator (671) comprising a piston (672); and wherein each of the third and the fourth electrical connectors (550, 560, 611a, 621a) is mechanically coupled with the piston (672).

5. The apparatus (900) of any of the preceding claims, wherein the mechanical device (950) comprises a spindle actuator; and wherein each of the third and the fourth electrical connectors (550, 560, 911, 921) is mechanically coupled with a mechanical element (952) of the spindle actuator.

6. The apparatus (700, 750) of any of claims 1-3, wherein the mechanical device comprises an actuator (701, 751) configured to move rotationally, the actuator (701, 751) preferably comprising a rotary solenoid.

7. The apparatus (600, 700, 750, 900) of any of the preceding claims, further comprising:
fifth and sixth electrical connectors (500, 601b, 631b, 901, 931), each of the fifth and the sixth electrical connectors (500, 601b, 631b, 901, 931) at least comprising a plurality of electrical conductors (501-504, 850), each electrical conductor of the plurality of electrical conductors (501-504, 850) being configured to electrically connect to a terminal (311-314) of each of the at least two of an at least second phase coil (101b, 300);
a seventh electrical connector (550, 611b, 911) configured to short-circuit the fifth electrical connector (500, 601b, 901) so that the at least two windings (121a-121f, 320a, 320b) of the at least second phase coil (101b, 300) become electrically connected in series; and
an eighth electrical connector (560, 621b, 921) configured to short-circuit the sixth electrical connector (500, 631b, 931) so that the at least two windings (121a-121f, 320a, 320b) of the at least second phase coil (101b, 300) become electrically connected in parallel;
wherein the mechanical device (670, 950) is further configured to selectively couple the seventh electrical connector (550, 611 b, 911) to the fifth electrical connector (500, 601b, 901), and to couple the eight electrical connector (560, 621b, 921) to the sixth electrical connector (500, 631b, 931).

8. An AC motor (100) comprising:
a stator comprising at least two phase coils (101a-101c, 300), each of the at least two phase coils (101a-101c, 300) comprising at least two windings (121a-121f, 320a, 320b); and
at least one apparatus (600, 700, 750, 900) according to claims 1-7 configured to modify an electrical configuration of one or more phase coils (101a-101c, 300) of the at least two phase coils (101a-101c, 300) of the stator.

9. A method for modifying an electrical configuration of a stator of an AC motor (100), the stator comprising at least two phase coils (101a-101c, 300), each of the at least two phase coils (101a-101c, 300) comprising at least two windings (121a-121f, 320a, 320b), the method comprising:
providing first and second electrical connectors (500, 601a, 631a, 901, 931), each of the first and the second electrical connectors (500, 601a, 631a, 901, 931) comprising a plurality of electrical conductors (501-504, 850);
for each of the first and the second electrical connectors (500, 601a, 631a, 901, 931), electrically connecting each electrical conductor of the plurality of electrical conductors (501-504, 850) to a terminal (311-314) of each of the at least two windings (121a-121f, 320a, 320b) of an at least first phase coil (101a, 300);
providing a third electrical connector (550, 611a, 911) configured to short-circuit the first electrical connector (500, 601a, 901) so that the at least two windings (121a-121f, 320a, 320b) of the at least first phase coil (101a, 300) become electrically connected in series;
providing a fourth electrical connector (560, 621a, 921) configured to short-circuit the second electrical connector (500, 631a, 931) so that the at least two windings (121a-121f, 320a, 320b) of the at least first phase coil (101a, 300) become electrically connected in parallel; and
selectively coupling, with a mechanical device (670, 950), the third electrical connector (550, 611a, 911) to the first electrical connector (500, 601a, 901), and the fourth electrical connector (560, 621a, 921) to the second electrical connector (500, 631a, 931).

10. The method of claim 9, wherein the plurality of electrical conductors (501-504, 850) of each of the first and the second electrical connectors (500, 601a, 631a, 901, 931) comprises first, second, third and fourth electrical conductors (501-504, 850); and wherein electrically connecting each electrical conductor of the plurality of electrical conductors (501-504, 850) comprises:
for each of the first and the second electrical connectors (500, 601a, 631a, 901, 931), electrically connecting:
the first electrical conductor (501, 850) to a first terminal (311) of an at least first of the at least two windings (121a-121f, 320a, 320b) of the at least first phase coil (101a, 300);
the second electrical conductor (502, 850) to a second terminal (312) of the at least first of the at least two windings (121a-121f, 320a, 320b) of the at least first phase coil (101a, 300);
the third electrical conductor (503, 850) to a first terminal (313) of an at least second of the at least two windings (121a-121f, 320a, 320b) of the at least first phase coil (101a, 300); and
the fourth electrical conductor (504, 850) to a second terminal (314) of the at least second of the at least two windings (121a-121f, 320a, 320b) of the at least first phase coil (101a, 300).

11. The method of claim 10, wherein:
upon coupling the third electrical connector (550, 611a, 911) to the first electrical connector (500, 601a, 901), the third electrical connector (550, 611a, 911) short-circuits the second electrical conductor (502, 850) of the first electrical connector (500, 601a, 901) and the third electrical conductor (503, 850) of the first electrical connector (500, 601a, 901); and
upon coupling the fourth electrical connector (560, 621a, 921) to the second electrical connector (500, 631a), the fourth electrical connector (560, 621a, 921) short-circuits:
the first electrical conductor (501, 850) of the second electrical connector (500, 631a, 931) and the third electrical conductor (503, 850) of the second electrical connector (500, 631a, 931); and
the second electrical conductor (502, 850) of the second electrical connector (500, 631a, 931) and the fourth electrical conductor (504, 850) of the second electrical connector (500, 631a, 931).

12. The method of any of claims 9-11, wherein selectively coupling with the mechanical device (670, 950) comprises:
operating an actuator (671) configured to move between at least a first position that couples the third electrical connector (550, 611a, 911) to the first electrical connector (500, 601a, 901), and at least a second position that couples the fourth electrical connector (560, 621a, 921) to the second electrical connector (500, 631a, 931), wherein the actuator (671) preferably comprises a piston (672) or a spindle (953).

13. The method of any of claims 9-11, wherein selectively coupling with the mechanical device comprises:
operating an actuator (701, 751) configured to move rotationally between at least a first position that couples the third electrical connector (550, 611a) to the first electrical connector (500, 601a), and at least a second position that couples the fourth electrical connector (560, 621a) to the second electrical connector (500, 631a), wherein the actuator (701, 751) preferably comprises a rotary solenoid.

14. The method of any of claims 9-13, further comprising:
providing fifth and sixth electrical connectors (500, 601b, 631b, 901, 931), each of the fifth and the sixth electrical connectors (500, 601b, 631b, 901, 931) comprising a plurality of electrical conductors (501-504, 850);
for each of the fifth and the sixth electrical connectors (500, 601b, 631b, 901, 931), electrically connecting each electrical conductor of the plurality of electrical conductors (501-504, 850) to a terminal (311-314) of each of the at least two windings (121a-121f, 320a, 320b) of an at least second phase coil (101b, 300);
providing a seventh electrical connector (550, 611b, 911) configured to short-circuit the fifth electrical connector (500, 601b, 901) so that the at least two windings (121a-121f, 320a, 320b) of the at least second phase coil (101b, 300) become electrically connected in series;
providing an eighth electrical connector (560, 621b, 921) configured to short-circuit the sixth electrical connector (500, 631b, 931) so that the at least two windings (121a-121f, 320a, 320b) of the at least second phase coil (101b, 300) become electrically connected in parallel; and
selectively coupling, with the mechanical device (670, 950), the seventh electrical connector (550, 611b, 911) to the fifth electrical connector (500, 601 b, 901), and the eighth electrical connector (560, 621b, 921) to the sixth electrical connector (500, 631b, 931).

15. The apparatus (600, 700, 750, 900) of any of claims 1-7, or the AC motor (100) of claim 8, or the method of any of claims 9-14, wherein the fourth electrical connector (560, 621a) comprises two electrical connectors (561a, 561b).
